# EUROPEAN PATENT SPECIFICATION

(11) **EP 0 643 099 B1**
(45) Date of publication and mention of the grant of the patent: **28.10.1998**
(21) Application number: 94306151.5
(22) Date of filing: 19.08.1994
(51) Int. Cl.: C08L 9/00, C08L 9/06, C08L 21/00, C08K 3/36, C08K 5/37, C08K 5/54

(54) **Method of making vulcanisable rubber compositions**
Verfahren zur Herstellung von vulkanisierbaren Kautschuk-Zusammensetzungen
Procédé de fabrication de compositions de caoutchouc vulcanisables

(30) Priority: 11.09.1993 GB 9318849
(43) Date of publication of application: 15.03.1995
(73) Proprietor: Sumitomo Rubber Industries Ltd., Kobe-shi, Hyogo 651 (JP)
(72) Inventor: Powell, Brian David William, Nuneaton, Warwickshire, CV11 4TL (GB)
(74) Representative: Moore, John Hamilton

(56) References cited:
- EP-A- 0 028 911
- EP-A- 0 547 344
- AT-B- 392 795
- US-A- 4 430 466

## Description

This invention relates to a method of making vulcanisable rubber compositions, e.g. for the manufacture of tyre treads.

It is well known that it is desirable to reduce the rolling resistance of a motor vehicle tyre in order to achieve reduced fuel consumption. However, it is also well known that reductions in rolling resistance are normally achieved at a cost, namely reduced tyre grip and/or reduced wear resistance.

Previous proposals to reduce the rolling resistance of a tyre have included reducing the amount of carbon black in the head composition, using a carbon black of relatively low surface area and adding a polymer with a relatively low glass transition temperature. None of these proposals has been entirely successful since, for example, a typical consequence is an undesirable reduction in tyre wet grip.

In EP-A-0547344 is disclosed a vulcanisable rubber composition comprising a non-conjugated ethylene-propylene-diene rubber with a cross-linker, an alkoxysilane and a silica or siicate filler in which mixing and vulcanisation temperatures disclosed are conventional.

US-A-4430466 discloses a sulphur-vulcanisable diene rubber composition including a siliceous filler, silane coupling agent and an accelerator in which the temperatures reached after blending the ingredients are from 150° to 160°C.

AT-B-392,795 also discloses a mixture of cross-linkable nibber, sulphur, silane coupling agent and silica filler, again with a conventional blending stage.

EP-A-0028911 discloses a vulcanisable rubber composition including silane, silica and carbon black that is particularly intended for use in a belt. Again its teaching of the blending stage is conventional.

There remains a need to improve tyre tread compositions to achieve a better overall balance of properties, in particular to improve, i.e. reduce, rolling resistance without impairing other properties such as the above-mentioned grip and wear.

Accordingly, the invention provides a method of making a vulcanisable rubber composition in which a rubbery polymer is mechanically blended with filler, vulcanisation agent and coupling agent, the filler comprising silica and the coupling agent being at least bifunctional to react with the silica and with the polymer, characterised in that the temperature of the composition during said blending is maintained below 130°C.

The coupling agent may be pre-coupled with the silica prior to the mechanical blending stage or it may couple in situ during the mechanical blending stage and/or a later vulcanisation stage.

Normally the reaction between the coupling agent and the polymer will be during the vulcanisation stage when the composition is heated to vulcanisation temperature.

In a preferred embodiment the mechanical blending of the composition is carried out at a temperature of 125°C. It may be carried out at temperatures as low as 100°C or lower, but a temperature of at least 110°C is preferred.

The coupling agent is preferably a silane coupling agent, e.g. bis(3-triethoxy-silyl propyl)-tetrasulphide or mercapto propyl triethoxy silane, particularly where the vulcanisation agent is sulphur. In these examples the alkoxy moieties react and couple with the silica and the sulphide moieties react with the rubbery polymer when the composition is vulcanised. Alternatively, the coupling agent may be, for example, a vinyl silane, e.g. vinyl triethoxy silane, or a thiocyanato triethoxy silane, e.g. thiocyanato-propyl-triethoxy silane, or a zirconate coupling agent, e.g. zirconium dineoalkanato di(3-mercapto) propionato-0.

The silica preferably has a nitrogen surface area of from 60 to 300 m²/g especially 80 to 250m²/g, and is preferably a precipitated silica.

When precoupled it is treated with the coupling agent prior to its incorporation in the rubber composition by, for example, physical mixing at ambient temperature and then subjecting the mixture to elevated temperature to promote the coupling reaction.

The composition may contain silica as the only filler or, if desired, admixtures with other fillers, e.g. carbon black, may be used. Where silica is the only filler, it is preferably used in an amount of from 30 parts to 120 parts per hundred parts by weight of rubbery polymer. Where other fillers are included the silica is preferably used in all amount of at least 15 parts per hundred parts by weight of rubbery polymer and the total filler content may preferably be up to 120 parts by weight.

The rubber composition may contain conventional additives, e.g. accelerators, activators, extenders and anti-degradants, as desired. The vulcanisation agent is preferably sulphur or a sulphur-containing compound but any other suitable vulcanisation agent may be used e.g. phenolic resin or peroxide. The vulcanisation agent may be added to the composition later in the mixing stage after the initial mechanical mixing together of the other ingredients or, preferably, it may be added in a subsequent mixing stage.

The rubbery polymer may be any polymer suitable for use in a tyre tread or in any other component of a tyre where the property of low rolling resistance is of benefit, for example in the undertread or sidewall. For example, it may be a solution- or emulsion-polymerised styrene-butadiene copolymer, a polybutadiene homopolymer or a vinyl polybutadiene or it may be a blend of polymers.

The coupling agent may be used in an amount of from 2 to 15 per cent by weight of the silica filler, preferably from 5 to 12 per cent.

The invention is particularly suitable for the provision of a tyre tread formed from a vulcanised composition which has been obtained by the method of the invention, i.e. by mechanical blending of a rubbery polymer, filler, vulcanisation agent and coupling agent, the filler comprising silica and the coupling agent being at least bi-functional to react with the silica and with the polymer, wherein the temperature of the composition being maintained below 130°C during the mechanical blending stage and then vulcanising the blended composition.

We have surprisingly found that the use of silica as a filler together with a coupling agent in tyre tread compositions together with the use of relatively low temperatures in the mechanical blending or compounding stage to mix the ingredients have beneficial effects on the properties obtained. Thus vulcanised tyre tread compositions of the invention have the desired reduced rolling resistance compared with conventional tyre treads while retaining an acceptable balance of grip and wear resistance. Moreover, this is achieved in an energy-saving manner because of the relatively low temperature compounding stage.

In order to demonstrate rolling resistance and grip properties of tyre tread compositions it is conventional practice to subject the compositions under laboratory conditions to viscoelastic testing and to predict the properties from the hysteresis characteristics displayed in the tests. The tests subject the tread composition to sinusoidal dynamic deformation under shear, tension or compression at a controlled temperature. It is well known for the wet grip and rolling resistance to be interpreted from the loss modulus and loss compliance values at temperatures of typically 0°C and 50°C respectively. Thus for high wet grip a high loss modulus and/or a high loss compliance at 0°C is desirable, whilst for low rolling resistance a low loss modulus and/or loss compliance at 50°C is desirable.

Thus the invention will now be further described by way of example only with reference to the following specific compounding and testing procedures and the Examples as detailed below.

Tyre tread compositions as detailed below were prepared using a 2-stage mixing procedure. In the first stage the compositions were each mixed in a 2 litre laboratory internal mixer up to a discharge temperature and for a mixing time as indicated below. In the second stage the mixing was completed by the addition of the sulphur and accelerator on a laboratory two roll mill at about 50°C for 5 minutes.

The mixed compositions were then cured in moulds for 20 minutes at 165°C.

Viscoelastic testing of the cured samples was then conducted as follows:-

| | | |
|---|---|---|
| Pre-tension | 10% | |
| Dynamic Strain | 0.5% (Double Strain Amplitude) | |
| Frequency | 10Hz | |
| Parameters | Complex Modulus | E* |
| | Dynamic Modulus | E₁ |
| | Loss Modulus | E₂ |
| | Loss Tangent (TD) | E₂/E₁ |
| | Loss Compliance (LC) | E₂/(E*)² |

Abrasion testing was conducted according to DIN 53516.

The compositions used, the mixing details and the test results obtained were as follows:-

### Examples 1, 2 and 3

| | Parts by Weight | | |
|---|---|---|---|
| | 1 | 2 | 3 |
| SBR(A) | 50.0 | 50.0 | 50.0 |
| SBR(B) | 68.8 | 68.8 | 68.8 |
| N220 Carbon Black | 68.0 | - | - |
| Silica | - | 68.0 | 68.0 |
| Coupling Agent | - | 11.0 | 11.0 |
| Aromatic Oil (D) | 12.4 | 12.4 | 12.4 |
| Zinc Oxide | 2.0 | 2.0 | 2.0 |
| Stearic Acid | 1.5 | 1.5 | 1.5 |
| 6PPD | 1.0 | 1.0 | 1.0 |
| Hydrocarbon Wax | 1.5 | 1.5 | 1.5 |
| Sulphur | 1.8 | 1.8 | 1.8 |
| CBS (accelerator) | 1.3 | 1.3 | 1.3 |
| DPG (accelerator) | - | 2.0 | 2.0 |

### Footnote

- SBR(A) =: Solution SBR, 15% styrene.
- SBR(B) =: Solution SBR, 30% styrene, extended with 37.5 parts aromatic oil.
- Silica =: Precipitated silica surface area 175m²/g marketed as Ultrasil VN3 by Degussa AG, Frankfurt, Germany. ("Ultrasil" is a Registered Trade Mark.).
- Coupling Agent =: Bis(3-triethoxysilylpropyl)-tetrasulphide, admixed 50:50 with N330 carbon black. Marketed as X-50S by Degussa AG (Frankfurt, Germany).
- 6PPD =: N(1,3-dimethylbutyl)-N¹-phenyl-p-phenylene diamine.
- CBS =: N-Cyclohexyl benzthiazole sulphenamide.
- DPG =: Diphenylguanidine.
- Aromatic Oil (D) =: S.G. 0.97 and viscosity (100°C) of 55 mm²/sec (cst).

### Mixing details (First Stage)

| | 1 | 2 | 3 |
|---|---|---|---|
| Discharge Temperature (°C) | 125 | 170 | 125 |
| Mixing Time (mins) | 5.5 | 7.5 | 5.5 |

### Viscoelastic Testing

| | | | 1 | 2 | 3 |
|---|---|---|---|---|---|
| 0°C | E* | MPa | 36.0 | 17.0 | 34.0 |
| | E₂ | MPa | 9.7 | 5.6 | 9.9 |
| | TD | | 0.28 | 0.34 | 0.31 |
| | LC | (GPa)⁻¹ | 7.6 | 18.8 | 8.8 |
| | | | | | |
| 50°C | E* | MPa | 12.5 | 7.6 | 12.7 |
| | E₂ | MPa | 2.1 | 0.7 | 1.4 |
| | TD | | 0.17 | 0.09 | 0.11 |
| | LC | (GPa)⁻¹ | 13.0 | 12.0 | 8.7 |

### Abrasion Testing

| | | | | |
|---|---|---|---|---|
| Volume Loss | mm³ | 106 | 85 | 109 |

It will be seen from the above results that the replacement of carbon black with silica and coupling agent (Examples 2 and 3) provides a reduction in loss modulus (E₂) and loss compliance (LC) at 50°C. Rolling resistance of tyre treads of Examples 2 and 3 will, therefore, be reduced. Unexpectedly, mixing silica at the lower temperature of 125°C (3) resulted in a beneficial maintenance of dynamic modulus (E*) compared with the high temperature mix (2). This will permit tyre handling properties to be maintained at the level of the carbon black compound (1). The lower temperature silica mix also provides a more satisfactory balance of E₂ and LC at 0°C, which is to the benefit of wet grip.

Wear resistance of the composition of Example 3 is maintained at a level comparable with that of the carbon black compound.

### Examples 4 and 5

The following further examples were carried out to show the improvement of the invention where the polymer used is an emulsion SBR. Compounding and testing conditions were as for the previous examples except if stated otherwise.

| | Parts by Weight | |
|---|---|---|
| | 4 | 5 |
| SBR (C) | 100.0 | 100.0 |
| N234 Black | 75.0 | |
| Silica | - | 75.0 |
| Coupling Agent | - | 12.0 |
| Aromatic Oil (D) | 56.0 | 56.0 |
| Zinc Oxide | 3.0 | 3.0 |
| Stearic Acid | 1.0 | 1.0 |
| 6PPD | 2.0 | 2.0 |
| Hydrocarbon Wax | 1.0 | 1.0 |
| Sulphur | 1.0 | 1.0 |
| CBS | 2.6 | 2.6 |

### FOOTNOTE

- SBR (C) =: Emulsion SBR, 40% styrene, extended with 37.5 parts aromatic oil.
- Aromatic Oil (D) =: SG 0.97, viscosity (100°C) 55 mm²/sec (cst).

### Mixing Details

| | 4 | 5 |
|---|---|---|
| Discharge Temperature (°C) | 125 | 125 |
| Mixing Time (mins) | 5.5 | 5.5 |

### Viscoelastic Testing

| | | | 4 | 5 |
|---|---|---|---|---|
| 0°C | E* | MPa | 34.0 | 21.0 |
| | E₂ | MPa | 12.5 | 9.6 |
| | TD | | 0.39 | 0.51 |
| | LC | (GPa)⁻¹ | 10.8 | 21.2 |
| 50°C | E* | MPa | 5.9 | 5.3 |
| | E₂ | MPa | 1.4 | 0.83 |
| | TD | | 0.24 | 0.16 |
| | LC | (GPa)⁻¹ | 39.2 | 30.1 |

It will be seen from the above results that the replacement of carbon black with silica and coupling agent at a mixing temperature below 130°C gives an increase in Loss Compliance at 0°C (for improved wet grip) and a reduction in Loss Modulus and Loss Compliance at 50°C (for lower rolling resistance). The dynamic modulus at 50°C is also maintained at a level comparable with that of the carbon black compound, for acceptable tyre handling properties.

## Claims

1. A method of making a vulcanisable rubber composition in which a rubbery polymer is mechanically blended with filler, vulcanisation agent and coupling agent, the filler comprising silica and the coupling agent being at least bi-functional to react with the silica and with the polymer, characterised in that the temperature of the composition during said blending is maintained below 130°C.

2. A method according to Claim 1, wherein the coupling agent is precoupled with the silica prior to the mechanical blending stage.

3. A method according to Claim 2, wherein the coupling agent is precoupled with the silica by physically mixing them at ambient temperature and then subjecting the mixture to elevated temperature to promote the coupling reaction.

4. A method according to Claim 1, wherein the coupling agent is coupled with the silica during the mechanical blending stage and/or a later vulcanisation stage.

5. A method according to any preceding claim, wherein the reaction between the coupling agent and the polymer takes place when the composition is heated to vulcanisation temperature.

6. A method according to any preceding claim, wherein the mechanical blending of the composition is carried out at a temperature of at least 110°C.

7. A method according to any preceding claim, wherein the vulcanisation agent is added to the composition in a subsequent stage after mixing of other ingredients.

8. A method according to any preceding claim, wherein the coupling agent used is a silane coupling agent.

9. A method according to Claim 8, wherein the coupling agent used is bis(3-triethoxy-silyl propyl) tetrasulphide or mercapto propyl methoxy silane.

10. A method according to Claim 8, wherein the coupling agent used is a vinyl silane or a thiocyanato-triethoxy silane.

11. A method according to Claim 10, wherein the coupling agent used is vinyl triethoxy silane or thiocyanato-propyl-triethoxy silane.

12. A method according to any one of Claims 1 to 7, wherein the coupling agent used is a zirconate.

13. A method according to Claims 12, wherein the coupling agent is zirconium dineoalkanato di(3-mercapto) propionato-0.

14. A method according to any preceding claim, wherein the silica used is a precipitated silica.

15. A method according to any preceding claim, wherein the silica used has a nitrogen surface area of from 60 to 300 m²/g.

16. A method according to Claim 15, wherein the silica used has a nitrogen surface area of from 80 to 250 m²/g.

17. A method according to any preceding claim, wherein the silica used is the only filler and is used in an amount of from 30 to 120 parts per 100 parts by weight of the rubbery polymer.

18. A method according to any one of Claims 1 to 16, wherein other material filler is used in addition to the silica and the silica filler is used in an amount of at least 15 parts per hundred parts by weight of the rubbery polymer and the total filler content used is up to 120 parts by weight.

19. A method according to any preceding claim, wherein the vulcanisation agent used is sulphur, a sulphur-containing compound, phenolic resin or peroxide.

20. A method according to any preceding claim, wherein the rubbery polymer used is a solution - or an emulsion-polymerised styrene-butadiene copolymer, a polybutadiene homopolymer or a vinyl polybutadiene.

21. A method according to any preceding claim wherein the coupling agent is used in an amount of from 2 to 15 per cent by weight of the silica.

22. A method according to Claim 21, wherein the coupling agent is used in an amount of from 5 to 12 per cent by weight of the silica.

## Patentansprüche

1. Verfahren zur Herstellung einer vulkanisierbaren Kautschukzusammensetzung, bei dem ein gummiartiges Polymer mechanisch mit Füllstoff, Vulkanisiermittel und Kupplungsmittel gemischt wird, wobei der Füllstoff Kieselsäure umfaßt und das Kupplungsmittel mindestens zwei Funktionen aufweist, und zwar, daß es mit der Kieselsäure und mit dem Polymer reagiert,
dadurch **gekennzeichnet,**
daß die Temperatur der Zusammensetzung während des Mischens unter 130°C gehalten wird.

2. Verfahren nach Anspruch 1,
wobei die Kieselsäure mit dem Kupplungsmittel vor dem mechanischen Mischschritt vorbehandelt wird.

3. Verfahren nach Anspruch 1,
wobei die Kieselsäure mit dem Kupplungsmittel vorbehandelt wird, indem diese bei Umgebungstemperatur physikalisch gemischt werden und dann die Mischung einer erhöhten Temperatur ausgesetzt wird, um die Kupplungsreaktion zu fördern.

4. Verfahren nach Anspruch 1,
wobei die Kieselsäure mit dem Kupplungsmittel während des mechanischen Mischschrittes und/oder eines späteren Vulkanisierschrittes behandelt wird.

5. Verfahren nach einem der vorhergehenden Ansprüche,
wobei die Reaktion zwischen dem Kupplungsmittel und dem Polymer stattfindet, wenn die Zusammensetzung auf die Vulkanisiertemperatur erwärmt wird.

6. Verfahren nach einem der vorhergehenden Ansprüche,
wobei das mechanische Mischen der Zusammensetzung bei einer Temperatur von mindestens 110°C ausgeführt wird.

7. Verfahren nach einem der vorhergehenden Ansprüche,
wobei das Vulkanisiermittel der Zusammensetzung in einem anschließenden Schritt nach dem Mischen von anderen Bestandteilen hinzugefügt wird.

8. Verfahren nach einem der vorhergehenden Ansprüche,
wobei das verwendete Kupplungsmittel ein Silankupplungsmittel ist.

9. Verfahren nach Anspruch 8,
wobei das verwendete Kupplungsmittel ein Bis(3-triethoxy-silylpropyl)tetrasulfid oder ein Mercaptopropyl-triethoxy-silan ist.

10. Verfahren nach Anspruch 8,
wobei das verwendete Kupplungsmittel ein Vinylsilan oder ein Thiocyanato-triethoxy-silan ist.

11. Verfahren nach Anspruch 10,
wobei das verwendete Kupplungsmittel Vinyl-triethoxy-silan oder Thiocyanatopropyl-triethoxy-silan ist.

12. Verfahren nach einem der Ansprüche 1 bis 7,
wobei das verwendete Kupplungsmittel ein Zirconat ist.

13. Verfahren nach Anspruch 12,
wobei das Kupplungsmittel Zirconium-dineoalkanato-di(3-mercapto)propionato-0 ist.

14. Verfahren nach einem der vorhergehenden Ansprüche,
wobei die verwendete Kieselsäure ein Kieselhydrogel ist.

15. Verfahren nach einem der vorhergehenden Ansprüche,
wobei die verwendete Kieselsäure eine Stickstoffoberfläche von 60 bis 300 m²/g aufweist.

16. Verfahren nach Anspruch 15,
wobei die verwendete Kieselsäure eine Stickstoffoberfläche von 80 bis 250 m²/g aufweist.

17. Verfahren nach einem der vorhergehenden Ansprüche,
wobei die verwendete Kieselsäure der einzige Füllstoff ist und in einer Menge von 30 bis 120 Teilen pro 100 Gewichtsteilen des gummiartigen Polymers verwendet wird.

18. Verfahren nach einem der Ansprüche 1 bis 16,
wobei zusätzlich zu der Kieselsäure Füllstoff aus anderem Material verwendet wird und der Kieselsäurefüllstoff in einer Menge von mindestens 15 Teilen pro einhundert Gewichtsteilen des gummiartigen Polymers verwendet wird und der verwendete Gesamtfüllstoffgehalt bis zu 120 Gewichtsteile beträgt.

19. Verfahren nach einem der vorhergehenden Ansprüche,
wobei das verwendete Vulkanisiermittel Schwefel, eine Schwefel enthaltende Verbindung, Phenolharz oder Peroxid ist.

20. Verfahren nach einem der vorhergehenden Ansprüche,
wobei das verwendete gummiartige Polymer ein lösungs- oder ein emulsionspolymerisiertes Styrol-Butadien-Copolymer, ein Polybutadien-Homopolymer oder ein Vinylpolybutadien ist.

21. Verfahren nach einem der vorhergehenden Ansprüche,
wobei das Kupplungsmittel in einer Menge von 2 bis 15 Gewichtsprozent der Kieselsäure verwendet wird.

22. Verfahren nach Anspruch 21,
wobei das Kupplungsmittel in einer Menge von 5 bis 12 Gewichtsprozent der Kieselsäure verwendet wird.

## Revendications

1. Méthode de fabrication d'une composition pour caoutchouc vulcanisable dans laquelle un polymère caoutchouteux est mélangé mécaniquement avec une charge, un agent de vulcanisation et un agent de couplage, la charge comprenant de la silice et l'agent de couplage étant au moins bifonctionnel de façon à réagir avec la silice et avec le polymère, caractérisée en ce que la température de la composition pendant ledit mélange est maintenue au-dessous de 130°C.

2. Méthode selon la revendication 1, dans laquelle l'agent de couplage est couplé au préalable à la silice avant l'étape de mélange mécanique.

3. Méthode selon la revendication 2, dans laquelle l'agent de couplage est couplé au préalable à la silice par mélange physique à la température ambiante, puis par traitement du mélange à une température élevée pour favoriser la réaction de couplage.

4. Méthode selon la revendication 1, dans laquelle l'agent de couplage est couplé à la silice pendant l'étape de mélange mécanique et/ou dans une étape de vulcanisation ultérieure.

5. Méthode selon une quelconque des revendications précédentes, dans laquelle la réaction entre l'agent de couplage et le polymère se produit quand la composition est chauffée à la température de vulcanisation.

6. Méthode selon une quelconque des revendications précédentes, dans laquelle le mélange mécanique de la composition est réalisé à une température d'au moins 110°C.

7. Méthode selon une quelconque des revendications précédentes, dans laquelle l'agent de vulcanisation est ajouté à la composition dans une étape ultérieure, après le mélange des autres ingrédients.

8. Méthode selon une quelconque des revendications précédentes, dans laquelle l'agent de couplage utilisé est un agent de couplage dérivé de silane.

9. Méthode selon la revendication 8, dans laquelle l'agent de couplage utilisé est le tétrasulfure de bis(3-triéthoxysilylpropyle) ou le mercaptopropyltriéthoxysilane.

10. Méthode selon la revendication 8, dans laquelle l'agent de couplage utilisé est un vinylsilane ou un thiocyanatotriéthoxysilane.

11. Méthode selon la revendication 10, dans laquelle l'agent de couplage utilisé le vinyltriéthoxysilane ou le thiocyanatopropyltriéthoxysilane.

12. Méthode selon une quelconque des revendications 1 à 7, dans laquelle l'agent de couplage utilisé est un zirconate.

13. Méthode selon la revendication 12, dans laquelle l'agent de couplage est un zirconium dineoalcanato di(3-mercapto)propionato-0.

14. Méthode selon une quelconque des revendications précédentes, dans laquelle la silice utilisée est une silice précipitée.

15. Méthode selon une quelconque des revendications précédentes, dans laquelle la silice utilisée a une aire spécifique mesurée à l'azote située entre 60 et 300 m²/g.

16. Méthode selon la revendication 15, dans laquelle la silice utilisée a une aire spécifique mesurée à l'azote située entre 80 et 250 m²/g.

17. Méthode selon une quelconque des revendications précédentes, dans laquelle la silice employée constitue la seule charge et est utilisée en une quantité située entre 30 et 120 parties pour 100 parties en masse de polymère caoutchouteux.

18. Méthode selon une quelconque des revendications 1 à 16, dans laquelle on utilise une autre charge en plus de la silice et dans laquelle la charge constituée par de la silice est utilisée en une quantité d'au moins 15 parties pour 1.00 parties en masse de polymère caoutchouteux et la charge totale est utilisée en une quantité allant jusqu'à 120 parties en masse.

19. Méthode selon une quelconque des revendications précédentes, dans laquelle l'agent de vulcanisation utilisé est du soufre, un composé contenant du soufre, une résine phénolique ou un peroxyde.

20. Méthode selon une quelconque des revendications précédentes, dans laquelle le polymère caoutchouteux utilisé est un copolymère styrène - butadiène polymérisé en solution ou en émulsion, un homopolymère polybutadiène ou un vinylpolybutadiène.

21. Méthode selon une quelconque des revendications précédentes, dans laquelle l'agent de couplage est utilisé en une quantité située entre 2 et 15 % en masse par rapport à la silice.

22. Méthode selon la revendication 21, dans laquelle l'agent de couplage est utilisé en une quantité située entre 5 et 12 % en masse par rapport à la silice.
